# EUROPEAN PATENT APPLICATION

(11) **EP 4 769 790 A1**
(43) Date of publication of application: **01.07.2026**
(21) Application number: 24870214.4
(22) Date of filing: 19.08.2024
(51) Int. Cl.: H01M 50/502, H01M 50/531, H01M 50/583, H01M 50/107, H01M 50/209

(54) **BATTERY CELL, BATTERY, AND ELECTRICAL APPARATUS**

(30) Priority: 26.09.2023 CN 202322622686 U
(71) Applicant: Contemporary Amperex Technology Co., Limited, Ningde, Fujian 352100 (CN)
(72) Inventor: ZHANG, Changtong, Ningde, Fujian 352100 (CN); BAI, Hualei, Ningde, Fujian 352100 (CN); YANG, Jianxiong, Ningde, Fujian 352100 (CN); GUO, Zhijun, Ningde, Fujian 352100 (CN); WANG, Peng, Ningde, Fujian 352100 (CN); MA, Ruoyan, Ningde, Fujian 352100 (CN); ZENG, Peng, Ningde, Fujian 352100 (CN); CHEN, Hongwei, Ningde, Fujian 352100 (CN); ZHANG, Jian, Ningde, Fujian 352100 (CN); LI, Yingle, Ningde, Fujian 352100 (CN)
(74) Representative: Gong, Jinping
(86) International application number: PCT/CN2024/113154
(87) International publication number: WO 2025/066668

(57) **Abstract**

The present application provides a battery cell (20), a battery (100), and a power consuming apparatus, relating to the field of batteries. The battery cell (20) includes an electrode terminal (213), an electrode assembly (22), and an adapter piece (23). The adapter piece (23) connects the electrode terminal (213) and the electrode assembly (22). The adapter piece (23) includes a main body region (231) and a thinned region (232) that are connected. A thickness of the thinned region (232) is less than a thickness of the main body region (231). The thinned region (232) is configured to be welded to the electrode terminal (213). This can solve the problem that other parts are easily damaged during a process of welding the adapter piece (23) and the electrode terminal (213).

## Description

The present application claims priority to Chinese Patent Application No. 202322622686.5, filed with the China National Intellectual Property Administration on September 26, 2023 and entitled "BATTERY CELL, BATTERY, AND POWER CONSUMING APPARATUS", which is incorporated herein by reference in its entirety.

### TECHNICAL FIELD

The present application relates to the technical field of batteries, and in particular, to a battery cell, a battery, and a power consuming apparatus.

### BACKGROUND

As people pay more attention to environment protection, electric vehicles have rapidly emerged in the vehicle industry due to their advantages of energy conservation and environment friendliness. An electric vehicle uses a battery as a power supply device. An adapter piece is disposed in a battery cell of the battery. The adapter piece is configured to connect an electrode terminal and a tab in the battery cell. The adapter piece plays an important role in battery safety and power supply stability.

The adapter piece is usually connected to the electrode terminal through welding. However, during a welding process, other parts and components may be damaged due to relatively large welding energy.

### SUMMARY

In view of this, examples of the present application provide a battery cell, a battery, and a power consuming apparatus, to resolve the problem that other parts and components are easily damaged during a process of welding an adapter piece and an electrode terminal.

An example of a first aspect of the present application provides a battery cell, including an electrode terminal, an electrode assembly, and an adapter piece. The adapter piece connects the electrode terminal and the electrode assembly. The adapter piece includes a main body region and a thinned region that are connected. A thickness of the thinned region is less than a thickness of the main body region. The thinned region is configured to be welded to the electrode terminal.

The battery cell provided in this example of the present application includes the adapter piece. The adapter piece includes the main body region and the thinned region. The thickness of the thinned region is less than the thickness of the main body region. The thinned region is configured to be welded to the electrode terminal. A smaller thickness of the thinned region indicates a smaller required laser energy. Therefore, by reducing the thickness of the thinned region, welding energy required for welding the adapter piece and the electrode terminal can be reduced, thereby reducing a probability of damage to other parts and components caused by the welding. In addition, the thickness of the main body region does not need to be reduced, so that the adapter piece can maintain a relatively high current carrying capacity. Therefore, the battery cell provided in this example of the present application can not only reduce a probability of damage to the surrounding parts and components caused by the welding energy, but also maintain a high current carrying capacity.

In some examples, the adapter piece is provided with a material accommodating space at the thinned region.

By providing the material accommodating space on the adapter piece, after the thinned region is compressed, a redundant material is accommodated in the material accommodating space nearby, or the material accommodating space is directly filled with the redundant material through local deformation, thereby ensuring smooth thinning of the thinned region, and reducing processing difficulty of the thinned region.

In some examples, the material accommodating space is a through hole extending through the thinned region.

By using the foregoing technical solution, the material accommodating space is configured as a through hole, which facilitates processing of the material accommodating space, and achieves relatively high manufacturing efficiency.

In some examples, the through hole extends through a middle portion of the thinned region.

By using the foregoing technical solution, a material transferred after the thinned region is compressed may be transferred from a periphery of the through hole to the inside of the through hole, thereby facilitating processing.

In some examples, a plurality of through holes are provided, and the plurality of through holes are uniformly distributed in the thinned region.

By using the foregoing technical solution, a volume of the material accommodating space can be further increased. In addition, the plurality of through holes are uniformly distributed, so that the redundant material in the thinned region can uniformly flow into the plurality of through holes, facilitating smooth thinning processing.

In some examples, the material accommodating space is a countersink disposed at the thinned region, and the countersink is disposed on at least one side of the thinned region along a thickness direction of the thinned region.

By using the foregoing technical solution, the material accommodating space is configured as a countersink on the adapter piece, so that the countersink can accommodate a material transferred in the thinned region, thereby facilitating smooth thinning of the thinned region. In addition, the countersink is simple in structure and convenient to process.

In some examples, the countersink is disposed on a side of the thinned region facing away from the electrode terminal, and a side of the thinned region facing the electrode terminal is planar.

By using the foregoing technical solution, the thinned region can be adhered and welded to the electrode terminal, helping to ensure a sufficient welding area and achieve a relatively good welding effect.

In some examples, the material accommodating space includes a through hole extending through the thinned region and a countersink disposed at the thinned region, the countersink is disposed on at least one side of the thinned region along a thickness direction of the thinned region, and the through hole is located at a bottom of the countersink.

By using the foregoing technical solution, the through hole and the countersink are both disposed in a region corresponding to the thinned region. During thinning of the thinned region, the redundant material in the thinned region may be transferred into both the through hole and the countersink, thereby improving the processing convenience.

In some examples, a cross-sectional shape of the material accommodating space includes at least one of a circular shape, an elliptic shape, an oblong shape, and a polygonal shape.

By using the foregoing technical solution, the shape of the material accommodating space can be processed according to requirements or processing conditions, realizing a relatively flexible processing method and relatively high degree of freedom for processing.

In some examples, a thickness of the main body region is 1 mm to 4 mm, and a thickness of the thinned region is 0.5 mm to 2.5 mm.

By using the foregoing technical solution, the thickness of the main body region can simultaneously guarantee the current carrying capacity of the adapter piece and meet space occupation requirements in the battery cell. The thickness of the thinned region can satisfy both the fusion depth requirements and laser energy requirements, reducing a probability of damage to other parts and components caused by laser welding.

In some examples, a thickness of the main body region is 1 mm to 2.5 mm, and a thickness of the thinned region is 0.6 mm to 1.5 mm.

By using the foregoing technical solution, the thickness of the main body region falling within the foregoing range can satisfy both the space occupation requirements and current carrying capacity requirements. The thickness of the thinned region falling within the foregoing range can reduce the thinning costs and also reduce energy of laser welding.

In some examples, the adapter piece includes a body and a boss, and the body has a first surface and a second surface disposed opposite to each other. The boss is formed by the body protruding out along a direction from the first surface to the second surface, the thinned region is disposed on the boss, and the main body region is disposed on the body.

By using the foregoing technical solution, the body of the adapter piece can be adhered to the shell, and the boss can abut against the electrode terminal, facilitating positioning of the adapter piece, thereby improving the positioning accuracy of a welding region, and avoiding deviation of a welding position.

In some examples, the boss includes a top wall and a connecting wall connected between the top wall and the body, the thinned region is disposed in the top wall, and an area of the thinned region is less than or equal to an area of the top wall.

By using the foregoing technical solution, at least some regions in the top wall of the boss are thinned regions, and the adapter piece may be aligned with the electrode terminal through the boss, and is welded to the electrode terminal by using the thinned regions on the boss, to reduce laser energy.

In some examples, a surface of the thinned region configured to face away from the electrode terminal is provided with a recess.

By using the foregoing technical solution, the recess can increase a roughness of the thinned region, reduce a reflection rate, and improve laser absorptivity, thereby reducing insufficient welding or poor welding caused by light reflection, enhancing connection strength between the adapter piece and the electrode terminal, and improving the yield of welding.

In some examples, the battery cell further includes a shell, and the electrode terminal is disposed on the shell. The adapter piece is provided with a positioning hole, the shell is provided with a positioning protrusion, and the positioning protrusion is inserted into the positioning hole.

By using the foregoing technical solution, the adapter piece can be precisely aligned with the electrode terminal, thereby improving utilization of the welding region.

In some examples, the shell includes an end cover, the end cover includes an end cover body and an insulating member disposed on the end cover body, and the positioning protrusion is disposed on the insulating member in a protruding manner.

By using the foregoing technical solution, the positioning protrusion can be insulated from the adapter piece, and the positioning protrusion can also position the adapter piece.

An example of a second aspect of the present application provides a battery, including the battery cell according to the first aspect.

An example of a third aspect of the present application provides a power consuming apparatus, including the battery according to the second aspect.

The above description only refers to an overview of the technical solutions of the present application. In order to understand the technical means of the present application more clearly such that it can be implemented according to the content of the specification, and to make the above-mentioned and other purposes, features, and advantages of the present application more apparent, specific examples of the present application are listed below.

### BRIEF DESCRIPTION OF THE DRAWINGS

To describe the technical solutions of the examples of the present application more clearly, the following briefly introduces the accompanying drawings required for describing the examples or conventional technologies. Apparently, the accompanying drawings in the following description show only some examples of the present application, and a person of ordinary skill in the art may still derive other drawings from these accompanying drawings without creative efforts.
FIG. 1 is a schematic structural diagram of a vehicle according to some examples of the present application;
FIG. 2 is a schematic structural diagram of a battery according to some examples of the present application;
FIG. 3 is a schematic structural diagram of a battery cell according to some examples of the present application;
FIG. 4A is a three-dimensional schematic diagram of an adapter piece according to some examples of the present application;
FIG. 4B is a three-dimensional schematic diagram of the adapter piece shown in FIG. 4A from another perspective;
FIG. 4C is a top view of the adapter piece shown in FIG. 4A;
FIG. 4D is a cross-sectional view of the adapter piece shown in FIG. 4C taken along line A-A;
FIG. 5A is a three-dimensional schematic diagram of an adapter piece according to some other examples of the present application;
FIG. 5B is a three-dimensional schematic diagram of the adapter piece shown in FIG. 5A from another perspective;
FIG. 5C is a top view of the adapter piece shown in FIG. 5A;
FIG. 5D is a cross-sectional view of the adapter piece shown in FIG. 5C taken along line B-B;
FIG. 6A is a three-dimensional schematic diagram of an adapter piece according to still some other examples of the present application;
FIG. 6B is a three-dimensional schematic diagram of the adapter piece shown in FIG. 6A from another perspective;
FIG. 6C is a top view of the adapter piece shown in FIG. 6A;
FIG. 6D is a cross-sectional view of the adapter piece shown in FIG. 6C taken along line C-C;
FIG. 7 is a schematic diagram of assembly of an end cover, an electrode terminal, and an adapter piece according to some examples of the present application;
FIG. 8 is a three-dimensional schematic diagram of the end cover, the electrode terminal, and the adapter piece shown in FIG. 7 from another perspective;
FIG. 9 is a partially enlarged view of a part D in FIG. 8;
FIG. 10 is a bottom view of the end cover, the electrode terminal, and the adapter piece shown in FIG. 7;
FIG. 11 is a cross-sectional view taken along line E-E in FIG. 10; and
FIG. 12 is a schematic partial view of the end cover, the electrode terminal, and the adapter piece in FIG. 11.

Meanings of reference numerals in the figures are as follows:
1000 - vehicle;
100 - battery; 10 - box; 11 - first portion; 12 - second portion;
200 - controller; 300 - motor;
20 - battery cell;
21 - shell; 211 - end cover; 2111 - positioning protrusion; 2112 - end cover body; 2113 - insulating member; 212 - case; 213 - electrode terminal;
22 - electrode assembly; 221 - tab;
23 - adapter piece; 231 - main body region; 232 - thinned region; 233 - material accommodating space; 2331 - through hole; 2332 - countersink; 234 - body; 2341 - first surface; 2342 - second surface; 235 - boss; 2351 - top wall; 2352 - connecting wall; 236 - recess; and 237 - positioning hole.

### DETAILED DESCRIPTION

The examples of the technical solutions of the present application will be described in detail below with reference to the accompanying drawings. The following examples are only used to illustrate the technical solutions of the present application more explicitly, and are thus only interpreted as examples, rather than used to limit the protection scope of the present application.

Unless otherwise defined, meanings of all technical and scientific terms used herein are the same as those usually understood by a person skilled in the art to which the present application belongs. The terms used herein are only intended to describe the specific examples rather than to limit the present application. The terms "include" and "have", and any variations thereof in the specification and claims of the present application, and in brief description of the accompanying drawings are intended to cover non-exclusive inclusions.

In the description according to the examples of the present application, the technical terms "first", "second", and the like are only used to distinguish different objects, and should not be understood as indicating or implying relative importance or implying the number, a specific order, or a primary and secondary relationship of indicated technical features. In the description according to the examples of the present application, "a plurality of" means two or more, unless otherwise expressly and specifically defined.

Reference to "examples" herein means that specific features, structures, or characteristics described in conjunction with the examples may be included in at least one example of the present application. The appearance of the phrase in various places in the specification does not necessarily refer to the same example or an independent or alternative example that is exclusive of other examples. A person skilled in the art explicitly or implicitly understands that the examples described in this specification may be combined with other examples.

In the description of the examples of the present application, the term "and/or" is only an associative relationship for describing associated objects, indicating that three relationships may be present. For example, A and/or B may indicate the following three cases: presence of A, presence of both A and B, and presence of B. In addition, the character "/" in this specification generally indicates an "or" relationship between the associated objects.

In the description of the examples of the present application, the term "a plurality of" means two or more (including two). Similarly, "a plurality of groups" means two or more groups (including two groups), and "a plurality of pieces" means two or more pieces (including two pieces).

In the description of the examples of the present application, the orientations or positional relationships indicated by the technical terms "center", "longitudinal", "transverse", "length", "width", "thickness", "upper", "lower", "front", "rear", "vertical", "horizontal", "top", "bottom", "inside", "outside", and the like are based on the orientations or positional relationships as shown in the accompanying drawings. These terms are only for ease and brevity of description of the examples of the present application rather than indicating or implying that the apparatuses or elements mentioned must have specific orientations or must be constructed or manipulated according to specific orientations, and therefore shall not be construed as any limitation on the examples of the present application.

In the description of the examples of the present application, unless otherwise explicitly specified or defined, the technical terms such as "mount", "connect", "join", and "fix" should be understood in a broad sense. For example, the connection may be a fixed connection, a detachable connection, or an integral connection; or the connection may be a mechanical connection or an electrical connection; or the connection may be a direct connection, an indirect connection through an intermediate medium, internal communication between two elements, or an interaction relationship between two elements. For a person of ordinary skill in the art, the specific meanings of the above terms in the examples of the present application may be interpreted according to specific situations.

An electric vehicle uses a battery as a power supply device. An adapter piece is disposed in a battery cell of the battery. The adapter piece is configured to connect an electrode terminal and a tab in the battery cell. The adapter piece plays an important role in battery safety and power supply stability.

It is found through research that the adapter piece is usually connected to the electrode terminal through welding. However, during a welding process, a temperature around the adapter piece may be excessively high due to relatively large welding energy, causing damage to parts and components around the adapter piece.

In order to solve the foregoing problem, through further research, a battery cell, a battery, and a power consuming apparatus are designed. The battery cell includes an adapter piece, the adapter piece includes a main body region and a thinned region that are connected to each other, a thickness of the thinned region is less than a thickness of the main body region, and the thinned region is configured to be welded to an electrode terminal. With the use of the foregoing structure, the thickness of the thinned region is less than the thickness of the main body region. A smaller thickness of the thinned region indicates a smaller required laser energy during welding of the thinned region and the electrode terminal. Thus, the adapter piece can reduce a probability of damage to the surrounding parts and components during welding. In addition, the thickness of the main body region does not need to be reduced, so that the adapter piece can maintain a relatively high current carrying capacity. Therefore, the battery cell provided in this example of the present application can not only reduce a probability of damage to the surrounding parts and components caused by the welding energy, but also maintain a high current carrying capacity.

An example of the present application provides a power consuming apparatus using a battery as a power source. The power consuming apparatus may be, but is not limited to, a mobile phone, a tablet computer, a notebook computer, an electric toy, an electric tool, a battery vehicle, an electric vehicle, a ship, a spacecraft, and the like. The electric toy may include a fixed or mobile electric toy, for example, a game console, an electric toy car, an electric toy ship, and an electric toy airplane. The spacecraft may include an airplane, a rocket, a space shuttle, a spaceship, and the like.

For ease of description, a power consuming apparatus according to an example of the present application being a vehicle 1000 is used as an example for description in the following examples.

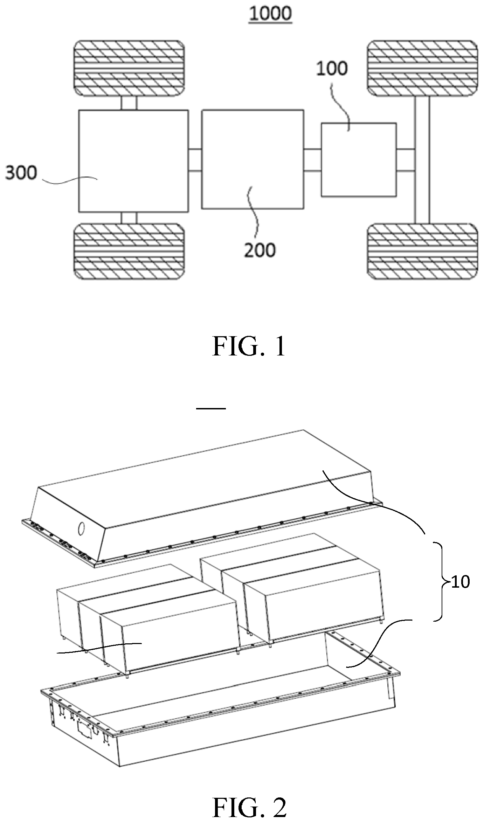

Referring to FIG. 1, FIG. 1 is a schematic structural diagram of a vehicle 1000 according to some examples of the present application. The vehicle 1000 may be a fuel vehicle, a gas vehicle, or a new energy vehicle. The new energy vehicle may be an all-electric vehicle, a hybrid electric vehicle, a range-extended electric vehicle, or the like. The vehicle 1000 is provided with a battery 100 inside. The battery 100 may be arranged at the bottom, head, or tail of the vehicle 1000. The battery 100 may be configured to supply power to the vehicle 1000. For example, the battery 100 may be used as an operational power source for the vehicle 1000. The vehicle 1000 may further include a controller 200 and a motor 300. The controller 200 is configured to control the battery 100 to supply power to the motor 300, for example, to meet working power requirements during starting, navigation, and traveling of the vehicle 1000.

In some examples of the present application, the battery 100 can not only serve as an operational power source for the vehicle 1000, but also serve as a driving power source for driving the vehicle 1000, replacing or partially replacing fuel or natural gas to provide driving power for the vehicle 1000.

Referring to FIG. 2, FIG. 2 is an exploded view of a battery 100 according to some examples of the present application. In some examples, the battery 100 includes a box 10 and a battery cell 20. The battery cell 20 is accommodated in the box 10.

The box 10 is configured to provide an accommodating space for the battery cell. The box 10 may use a variety of structures. In some examples, the box 10 may include a first portion 11 and a second portion 12. The first portion 11 and the second portion 12 cover each other. The first portion 11 and the second portion 12 jointly define the accommodating space for accommodating the battery cell. The second portion 12 may be of a hollow structure with an opening at one end. The first portion 11 may be of a plate-like structure. The first portion 11 covers an open side of the second portion 12, so that the first portion 11 and the second portion 12 jointly define the accommodating space. The first portion 11 and the second portion 12 each may also be of a hollow structure with an opening at one side. The open side of the first portion 11 covers the open side of the second portion 12. Certainly, the box 10 formed by the first portion 11 and the second portion 12 may be in various shapes, such as a cylinder and a cuboid.

In the battery 100, a plurality of battery cells 20 are provided. The plurality of battery cells 20 may be connected in series, parallel, or series-parallel. Series-parallel connection means that both series connection and parallel connection exist among the plurality of battery cells 20. The plurality of battery cells 20 may be directly connected in series, parallel, or series-parallel, and then an entirety formed by the plurality of battery cells 20 is accommodated in the box 10. Certainly, the battery 100 may also be formed in a manner that a plurality of battery cells 20 may be first connected in series, parallel, or series-parallel to form battery modules, and then a plurality of battery modules are connected in series, parallel, or series-parallel to form an entirety which is accommodated in the box 10. The battery 100 may further include other structures. For example, the battery 100 may further include a busbar component for achieving electrical connection between the plurality of battery cells 20.

Each battery cell 20 may be a secondary battery or a primary battery. Each battery cell 20 may also be a lithium-sulfur battery, a sodium-ion battery, or a magnesium-ion battery, but is not limited thereto. The battery cell 20 may be cylindrical, flat, cuboid, or in other shapes.

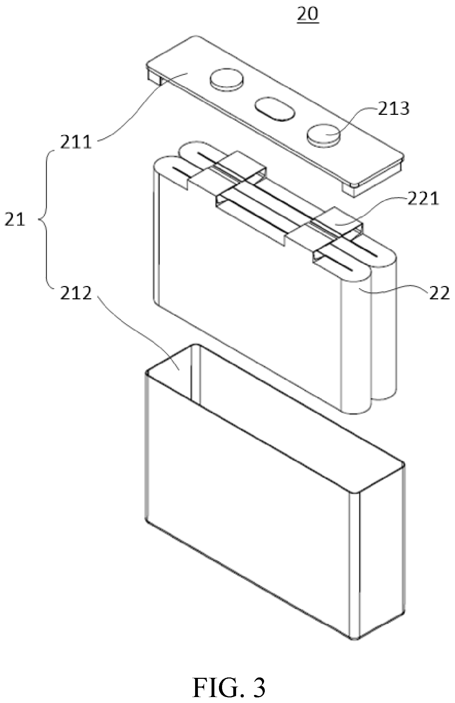

In the examples of the present application, the battery cell is a smallest unit constituting a battery. Referring to FIG. 3, the battery cell 20 includes a shell 21, an electrode assembly 22, and an adapter piece.

The shell 21 is an element for forming an internal environment of the battery cell 20. The internal environment formed by the shell 21 may be configured to accommodate the electrode assembly 22, an electrolyte, and other components. The shell 21 may include a case 212 with an opening at one end, and an end cover 211 covering the case 212, or may be of an integrally formed structure. The shell 21 may have various shapes and sizes, such as a cuboid shape, a cylindrical shape, and a hexagonal prism shape. Specifically, the shape of the shell 21 may be determined based on a specific shape and size of the electrode assembly 22. The shell 21 may be made of various materials, such as copper, iron, aluminum, stainless steel, aluminum alloy, and plastic. The shell 21 is provided with an electrode terminal 213. The electrode terminal 213 may be disposed on the end cover 211, or may be disposed on a side wall of the case 212. The electrode terminal 213 is electrically connected to the electrode assembly 22 through the adapter piece.

The electrode assembly 22 is a component in the battery cell 20 that undergoes electrochemical reactions. The shell 21 may include one or more electrode assemblies 22. The electrode assembly includes a positive electrode plate and a negative electrode plate. Parts of the positive electrode plate and the negative electrode plate with active substances constitute a main body portion of the electrode assembly 22, while parts of the positive electrode plate and the negative electrode plate without active substances separately constitute a tab 221.

The battery cell 20 works mainly relying on movement of metal ions between the positive electrode plate and the negative electrode plate. The positive electrode plate includes a positive electrode current collector and a positive electrode active substance layer. A surface of the positive electrode current collector is coated with the positive electrode active substance layer. A part of the positive electrode current collector that is not coated with the positive electrode active substance layer protrudes out of a part of the positive electrode current collector that is coated with the positive electrode active substance layer. The part of the positive electrode current collector that is not coated with the positive electrode active substance layer serves as a positive electrode tab. A lithium-ion battery is used as an example, in which the positive electrode current collector may be made of aluminum, and the positive electrode active substance may be lithium cobalt oxide, lithium iron phosphate, ternary lithium, lithium manganese oxide, or the like. The negative electrode plate includes a negative electrode current collector and a negative electrode active substance layer. A surface of the negative electrode current collector is coated with the negative electrode active substance layer. A part of the negative electrode current collector that is not coated with the negative electrode active substance layer protrudes from a part of the negative electrode current collector that is coated with the negative electrode active substance layer. The part of the negative electrode current collector that is not coated with the negative electrode active substance layer serves as a negative electrode tab. The negative electrode current collector may be made of copper, and the negative electrode active substance may be carbon, silicon, or the like. To allow a large current to pass through without any fusing, a plurality of positive electrode tabs are provided and stacked together, and a plurality of negative electrode tabs are provided and stacked together.

The electrode assembly 22 may further includes a separator. The separator may be made of a material such as PP (polypropylene) or PE (polyethylene).

An example of a first aspect of the present application proposes a battery cell 20, including an adapter piece 23. The adapter piece 23 is configured to connect an electrode assembly 22 and an electrode terminal 213.

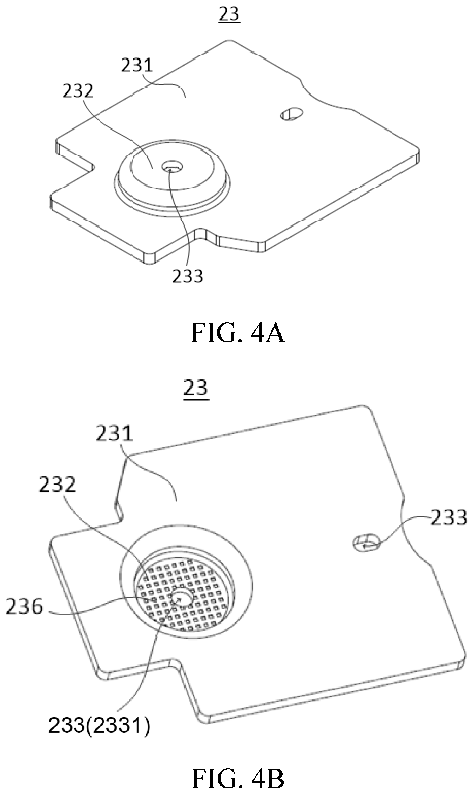

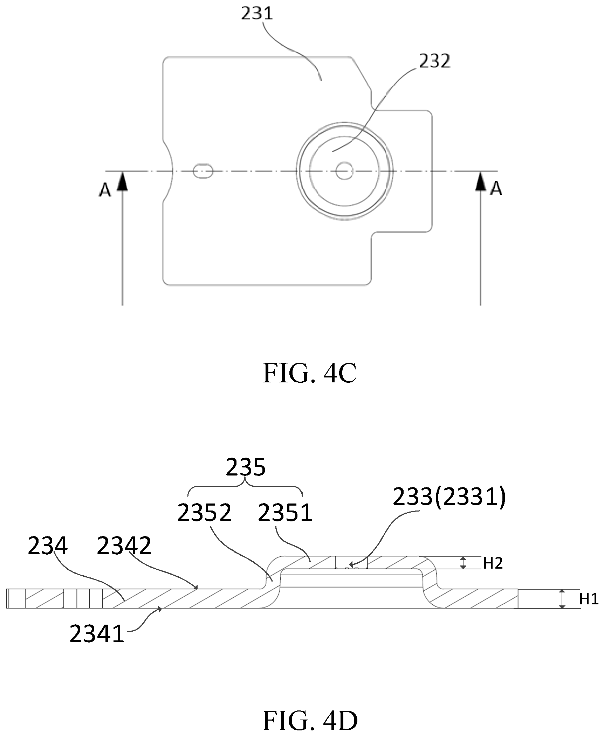

Referring to FIG. 4A to FIG. 4D, some examples of the present application provide a battery cell 20, including an electrode terminal 213, an electrode assembly 22, and an adapter piece 23. The adapter piece 23 connects the electrode terminal 213 and the electrode assembly 22. The adapter piece 23 includes a main body region 231 and a thinned region 232 that are connected. A thickness of the thinned region 232 is less than a thickness of the main body region 231. The thinned region 232 is configured to be welded to the electrode terminal 213.

The adapter piece 23 may be in a sheet shape to reduce space occupation. It may be understood that the adapter piece 23 may also be in another shape, for example, may be of an arc-curved sheet structure or block structure. The adapter piece 23 may be made of a metal material having good electrical conduction properties, so that a current can be stably transmitted between the electrode assembly 22 and the electrode terminal 213. The metal material may be, but is not limited to, copper, aluminum, and the like.

The adapter piece 23 includes a main body region 231 and a thinned region 232 that are connected. The main body region 231 and the thinned region 232 may be of an integrated structure, or may be two parts that are connected to each other. The main body region 231 is configured to be welded to the tab 221, and the thinned region 232 is configured to be welded to the electrode terminal 213. The adapter piece 23 may include one or more thinned regions 232, and at least one thinned region 232 is configured to be welded to the electrode terminal 213. The thinned region 232 may have various shapes, for example, a circular shape and a square shape.

A thickness of the thinned region 232 is less than a thickness of the main body region 231. As shown in FIG. 4D, the main body region 231 has a first thickness H1, and the thinned region 232 has a second thickness H2, where H2 < H1.

The thinned region 232 may be thinned through stamping, realizing simple and efficient manufacturing. In other examples, the thinned region 232 may also be thinned through cold heading, milling, etching, or the like.

The thinned region 232 is configured to be welded to the electrode terminal 213. The thinned region 232 may be connected to the corresponding electrode terminal 213 through laser welding. A laser beam has a very high energy density and can rapidly heat and fuse a material, thereby implementing high-speed and high-efficiency welding. Other parts and components such as a sealing ring are disposed close to a welding position of the adapter piece 23 and the electrode terminal 213. The sealing ring is used as an example, in which a melting point of the adapter piece 23 is higher than a melting point of the sealing ring, and if welding energy is excessively high, heat accumulated during a welding process may cause hot fusion or other damage problems to the parts and components such as the sealing ring. In these examples of the present application, energy required for welding and adapting connection of the electrode terminal 213 can be reduced by reducing the thickness of the thinned region 232, thereby reducing a probability of damage to the parts and components surrounding the welding position.

The adapter piece 23 provided in these examples of the present application includes a main body region 231 and a thinned region 232. The thickness of the thinned region 232 is less than the thickness of the main body region 231, and the thinned region 232 is configured to be welded to the electrode terminal 213. A smaller thickness of the thinned region 232 indicates a smaller required laser energy. Therefore, by reducing the thickness of the thinned region 232, welding energy required for welding the adapter piece 23 and the electrode terminal 213 can be reduced, thereby reducing a probability of damage to other parts and components caused by the welding. In addition, the thickness of the main body region 231 does not need to be reduced, so that the adapter piece 23 can maintain a relatively high current carrying capacity. Therefore, the adapter piece 23 provided in these examples of the present application can not only reduce a probability of damage to the surrounding parts and components caused by the welding energy, but also maintain a high current carrying capacity.

In some examples, the adapter piece 23 is provided with a material accommodating space 233, and the material accommodating space 233 is configured to accommodate a material transferred from the thinned region 232.

The adapter piece 23 may be an integrated plate material, and it is difficult to locally thin the adapter piece 23. Therefore, in these examples of the present application, the adapter piece 23 is provided with the material accommodating space 233, to facilitate manufacture of the thinned region 232 through mechanical pressing such as punching and cold heading.

During punching, part of the material in the thinned region 232 may be transferred into the material accommodating space 233, thereby reducing the thickness of the thinned region 232 and improving the processing convenience. The material transferred from the thinned region 232 is a blank of the thinned region 232.

By providing the material accommodating space 233 on the adapter piece 23, during punching, after the thinned region 232 is compressed, the redundant material is accommodated in the material accommodating space 233 nearby, or the material accommodating space 233 is directly filled with the redundant material through local deformation, thereby ensuring smooth thinning of the thinned region 232, and reducing processing difficulty of the thinned region 232.

In some examples, the material accommodating space 233 extends along a thickness direction of the thinned region 232.

Specifically, the material accommodating space 233 may be disposed inside the thinned region 232, and/or the material accommodating space 233 is disposed adjacent to the thinned region 232. The material accommodating space 233 extends along the thickness direction of the thinned region 232, to facilitate processing. The material accommodating space 233 may be in various forms, such as in a slot shape and in a hole shape. During manufacturing of the adapter piece 23, the material accommodating space 233 may be pre-manufactured, and then the thinned region 232 is thinned through punching, such that a material transferred in the thinned region 232 is smoothly transferred into the material accommodating space 233.

By using the foregoing technical solution, the material accommodating space 233 is convenient to process, and is simple and efficient to manufacture.

As shown in FIG. 4A to FIG. 4D, in some examples, the material accommodating space 233 is a through hole 2331 extending through the thinned region 232.

Specifically, the through hole 2331 extends through two opposite sides of the thinned region 232 along the thickness direction of the thinned region 232, and the through hole 2331 is processed in a relatively simple manner and is easy to process. Before the thinned region 232 is punched and thinned, the through hole 2331 is pre-manufactured in a preset region of the thinned region 232. Then, when the thinned region 232 is punched, the redundant material in the thinned region 232 enters the through hole 2331, reducing a diameter of the through hole 2331.

The material accommodating space 233 is configured as the through hole 2331, which facilitates processing of the material accommodating space 233, and achieves relatively high manufacturing efficiency.

As shown in FIG. 4B and FIG. 4D, in some examples, the through hole 2331 extends through a middle portion of the thinned region 232.

Since the thinned region 232 is generally small in size, the through hole 2331 is disposed in the middle portion of the thinned region 232, so that a material transferred after the thinned region 232 is compressed can be transferred from the periphery of the through hole 2331 to the inside of the through hole 2331, facilitating processing.

In some other examples, a plurality of through holes 2331 are provided, and the plurality of through holes 2331 are uniformly distributed in the thinned region 232.

By providing the plurality of through holes 2331, a volume of the material accommodating space 233 can be further increased. In addition, the plurality of through holes 2331 are uniformly distributed, such that the redundant material in the thinned region 232 can uniformly flow into the plurality of through holes 2331, facilitating smooth thinning processing.

It may be understood that an initial volume of the material accommodating space 233 needs to be greater than or equal to a to-be-reduced volume of the thinned region 232, so as to accommodate the material transferred from the thinned region 232. Therefore, a quantity and an initial diameter of the through holes 2331 may be set based on the to-be-reduced volume of the thinned region 232.

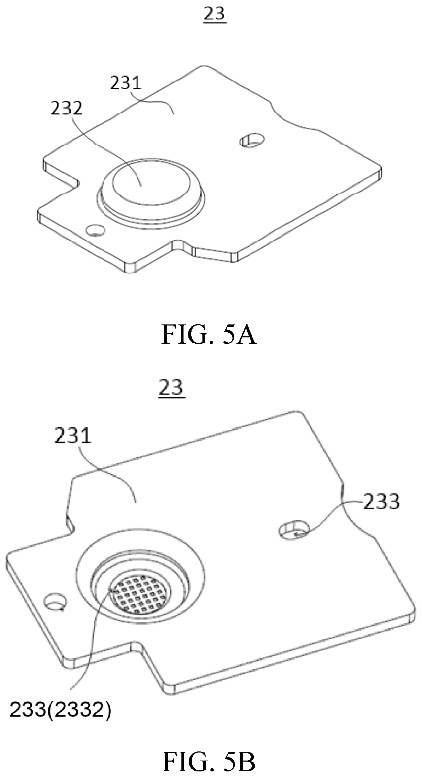

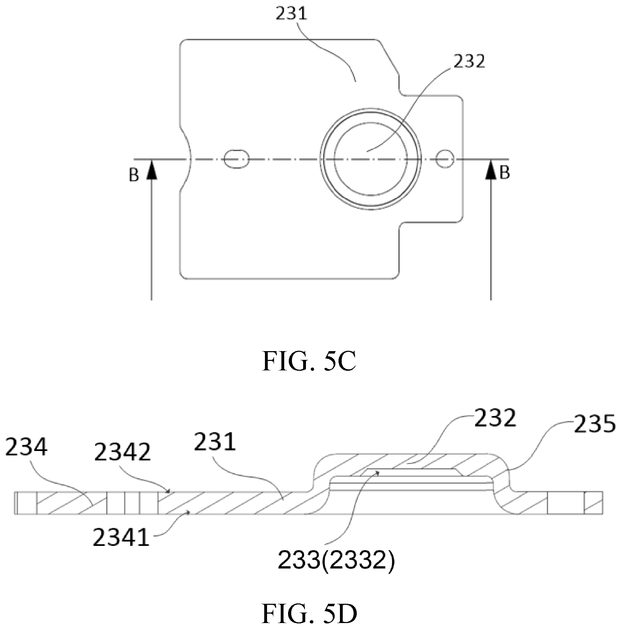

Referring to FIG. 5A to FIG. 5D, some other examples of the present application provide an adapter piece 23, including a main body region 231 and a thinned region 232 that are connected. A thickness of the thinned region 232 is less than a thickness of the main body region 231, and the thinned region 232 is configured to be welded to an electrode terminal 213. The adapter piece 23 is provided with a material accommodating space 233. In these examples, the material accommodating space 233 is a countersink 2332 disposed at the thinned region 232, and the countersink 2332 is disposed on at least one side of the thinned region 232 along a thickness direction of the thinned region 232.

Also referring to FIG. 3, in one example, the countersink 2332 is disposed on a side of the thinned region 232 facing away from the electrode terminal 213, and a side of the thinned region 232 facing the electrode terminal 213 is configured to be adhered and welded to the electrode terminal 213.

In another example, the countersink 2332 may also be disposed on a side of the thinned region 232 close to the electrode terminal 213. In this case, the electrode terminal 213 may be provided with a protrusion structure matching the countersink, to facilitate the adhesion and welding of the thinned region 232 to the electrode terminal 213. In still another example, the side of the thinned region 232 close to the electrode terminal 213 and a side of the thinned region 232 far away from the electrode terminal 213 may each be provided with the countersink 2332.

The countersink 2332 is a blind groove that is recessed on the adapter piece 23. When the thinned region 232 is punched, the redundant material in the thinned region 232 may be compressed to an edge portion of the countersink 2332.

Optionally, the adapter piece 23 includes a body 234 and a boss 235, and the body 234 has a first surface 2341 and a second surface 2342 disposed opposite to each other. The boss 235 is formed by the body 234 protruding along a direction from the first surface 2341 to the second surface 2342, and the thinned region 232 is disposed on the boss 235. In this case, the countersink 2332 is also located on the boss 235. In other examples, the adapter piece 23 may also be in an approximately flat plate shape. To be specific, the adapter piece 23 is not provided with the boss 235, and similarly, the material accommodating space 233 may be configured as the countersink 2332.

By using the foregoing technical solution, the material accommodating space 233 is configured as the countersink 2332 on the adapter piece 23, such that the countersink 2332 can accommodate the material transferred in the thinned region 232, thereby facilitating smooth thinning of the thinned region 232. In addition, the countersink 2332 is simple in structure and convenient to process.

In some examples, the countersink 2332 is disposed on a side of the thinned region 232 facing away from the electrode terminal 213, and a side of the thinned region 232 facing the electrode terminal 213 is planar.

As a material accommodating space, the countersink 2332 can accommodate the material transferred in the thinned region 232. The side of the thinned region 232 facing the electrode terminal 213 is planar, so that the thinned region 232 can be adhered and welded to the electrode terminal 213, helping to ensure a sufficient welding area and achieve a relatively good welding effect.

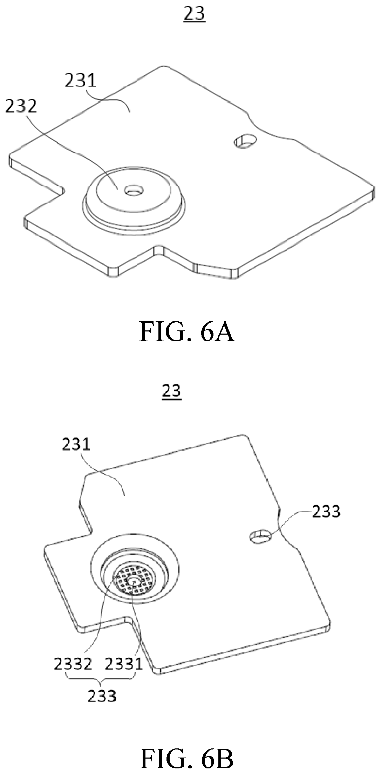

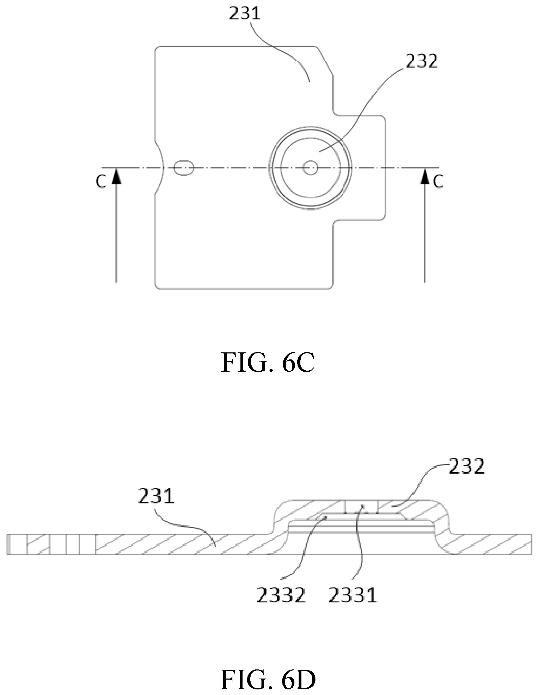

Referring to FIG. 6A to FIG. 6D, still some other examples of the present application provide an adapter piece 23, including a main body region 231 and a thinned region 232 that are connected. A thickness of the thinned region 232 is less than a thickness of the main body region 231. The adapter piece 23 is provided with a material accommodating space 233. In these examples, The material accommodating space 233 includes a through hole 2331 extending through the thinned region 232 and a countersink 2332 disposed at the thinned region 232. The countersink 2332 is disposed on at least one side of the thinned region 232 along a thickness direction of the thinned region 232. The through hole 2331 is located at a bottom of the countersink 2332.

Optionally, the countersink 2332 is disposed on a side of the thinned region 232 facing away from the electrode terminal 213, and the through hole 2331 is disposed in the middle portion of the thinned region 232. Both the countersink 2332 and the through hole 2331 can accommodate a material transferred from the thinned region 232.

By using the foregoing technical solution, the through hole 2331 and the countersink 2332 are both disposed in a region corresponding to the thinned region 232. During thinning of the thinned region 232, the redundant material in the thinned region 232 may be transferred into both the through hole 2331 and the countersink 2332, thereby improving the processing convenience.

Referring to FIG. 4A to FIG. 6D, in some examples, a cross-sectional shape of the material accommodating space 233 includes at least one of a circular shape, an elliptic shape, an oblong shape, and a polygonal shape. The polygonal shape is, for example, a triangular shape, a square shape, a pentagonal shape, or a hexagon shape.

A cross section of the material accommodating space 233 refers to a cross section of the material accommodating space 233 in a thickness direction perpendicular to the thinned region 232. For example, in the examples provided in FIG. 4A to FIG. 6D, the material accommodating space 233 may include a through hole 2331 and/or a countersink 2332, and a cross section of the through hole 2331 and/or the countersink 2332 is circular. In other examples, a cross-sectional shape of the through hole 2331 and/or the countersink 2332 may also include one or more of a circular shape, an elliptic shape, an oblong shape, and a polygonal shape.

By using the foregoing technical solution, the shape of the material accommodating space 233 may be processed according to requirements or processing conditions, realizing a relatively flexible processing method and relatively high degree of freedom for processing.

Referring to FIG. 4A to FIG. 6D, in some examples, the thickness of the main body region 231 is 1 mm to 4 mm, and the thickness of the thinned region 232 is 0.5 mm to 2.5 mm.

Specifically, the thickness of the main body region 231 is, for example, 1 mm, 1.5 mm, 2 mm, 3 mm, or 4 mm. The thickness of the thinned region 232 is, for example, 0.5 mm, 1 mm, 1.5 mm, 2 mm, or 2.5 mm, and the thickness of the thinned region 232 is less than the thickness of the main body region 231.

The thickness of the main body region 231 is related to a current carrying capacity of the adapter piece 23. By setting the thickness of the main body region 231 to 1 mm to 4 mm, the current carrying capacity requirements of the adapter piece 23 and the space occupation requirements in the battery cell 20 can both be satisfied. The thickness of the thinned region 232 is related to energy required for the welding. By setting the thickness of the thinned region 232 to 0.5 mm to 2.5 mm, the fusion depth requirements and laser energy requirements can both be satisfied, reducing a probability of damage to other parts and components caused by laser welding.

In some examples, the thickness of the main body region 231 is 1 mm to 2.5 mm, and the thickness of the thinned region 232 is 0.6 mm to 1.5 mm.

The thickness of the main body region 231 falling within the foregoing range can satisfy both the space occupation requirements and the current carrying capacity requirements. The thickness of the thinned region 232 falling within the foregoing range can reduce the thinning costs and also reduce energy of laser welding.

Referring to FIG. 4D, in some examples, the adapter piece 23 includes a body 234 and a boss 235. The body 234 has a first surface 2341 and a second surface 2342 disposed opposite to each other. The boss 235 is formed by the body 234 protruding along a direction from the first surface 2341 to the second surface 2342, and the thinned region 232 is disposed on the boss 235. The main body region 231 is disposed on the body 234.

The body 234 is configured to be welded to the tab 221. In some examples, the body 234 is consistent in thickness. In this case, each region of the body 234 is the main body region 231. In some other examples, a region on the body 234 welded to the tab 221 may also configured as the thinned region 232, and the other regions of the body 234 are all the main body region 231.

By using the foregoing technical solution, the body 234 of the adapter piece 23 can be adhered to the shell, and the boss 235 can abut against the electrode terminal 213, facilitating positioning of the adapter piece 23, thereby improving the positioning accuracy of a welding region, and avoiding deviation of a welding position.

In other examples, the adapter piece 23 may also be in a flat plate shape, that is, there is no structure of the boss 235.

Still referring to FIG. 4D, in some examples, the boss 235 includes a top wall 2351 and a connecting wall 2352 connected between the top wall 2351 and the main body region 231, and at least some regions in the top wall 2351 are the thinned regions 232.

An area of the thinned region 232 is less than or equal to an area of the top wall 2351. When the area of the thinned region 232 is less than the area of the top wall 2351, the top wall 2351 is adhered to the electrode terminal 213, and only the thinned region 232 is configured to be welded to the electrode terminal 213. When the area of the thinned region 232 is equal to the area of the top wall 2351, the entire top wall 2351 can be welded to the electrode terminal 213. It may be understood that a thickness of the connecting wall 2352 may also be less than a thickness of the body 234.

By using the foregoing technical solution, at least some regions of the top wall 2351 of the boss 235 are the thinned regions 232, and the adapter piece 23 may be aligned with the electrode terminal 213 through the boss 235, and is welded to the electrode terminal 213 by using the thinned regions 232 on the boss 235, to reduce laser energy.

In some examples, the top wall 2351 is the thinned region 232, the body 234 is the main body region 231, the main body region 231 has a first thickness H1, and the thinned region 232 has a second thickness H2, where H2 < H1. It may be understood that the top wall has a first thickness H1, and the body has a second thickness H2, where H2 < H1. In this way, the thickness of the top wall 2351 in the boss 235 is less than the thickness of the body 234, the top wall 2351 is connected to the electrode terminal 213, and the thickness of the top wall 2351 is less than the thickness of the body 234, to reduce laser energy required during welding.

Referring to FIG. 4A to FIG. 6D, when the adapter piece 23 includes the boss 235, the material accommodating space 233 may be disposed inside the boss 235, so as to accommodate a material transferred from the thinned region 232.

Referring to FIG. 4B, in some examples, a surface of the thinned region 232 facing away from the electrode terminal is provided with a recess 236.

One or more recesses 236 may be provided. When a plurality of recesses 236 are provided, the plurality of recesses 236 may be disposed in an array on the surface of the thinned region. It may be understood that the plurality of recesses 236 may also be arranged in another sequence or be arranged randomly. The recess 236 is configured to increase a surface roughness of the thinned region 232, reduce a reflection rate, and improve laser absorptivity, thereby reducing insufficient welding or poor welding caused by light reflection, enhancing connection strength between the adapter piece 23 and the electrode terminal, and improving the yield of welding.

Still referring to FIG. 4A to FIG. 4D, some examples of the present application provide an adapter piece 23, including a main body region 231 and a thinned region 232 that are connected. A thickness of the thinned region 232 is less than a thickness of the main body region 231, and the thinned region 232 is configured to be welded to an electrode terminal 213. The adapter piece 23 is provided with a material accommodating space 233. The material accommodating space 233 includes a through hole 2331 extending through the thinned region 232, and/or a countersink 2332 disposed on a side of the thinned region 232. A surface of the thinned region 232 facing away from the electrode terminal 213 is provided with a recess 236. The thickness of the thinned region 232 of the adapter piece 23 is less than the thickness of the main body region 231, thereby reducing a probability of damage to parts and components caused by welding while maintaining a relatively high current carrying capacity. The material accommodating space 233 on the adapter piece 23 can accommodate the material transferred from the thinned region 232, improving the processing convenience of the thinned region 232, and reducing the processing difficulty. The recess 236 on the surface of the adapter piece 23 can resist light reflection, so as to improve the laser absorption efficiency.

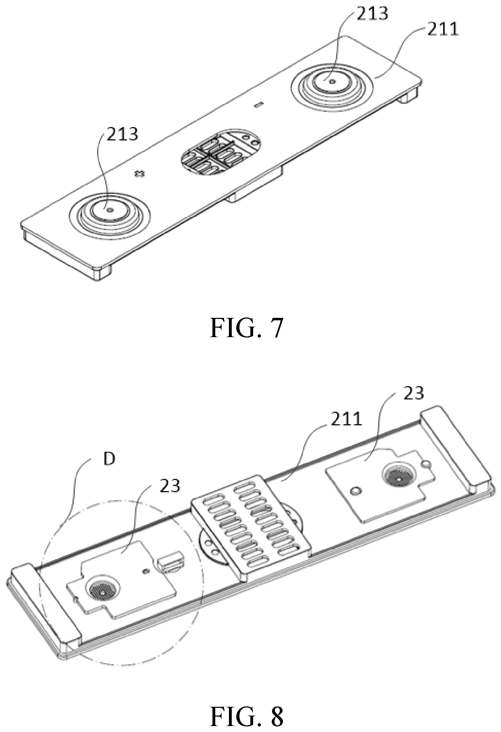

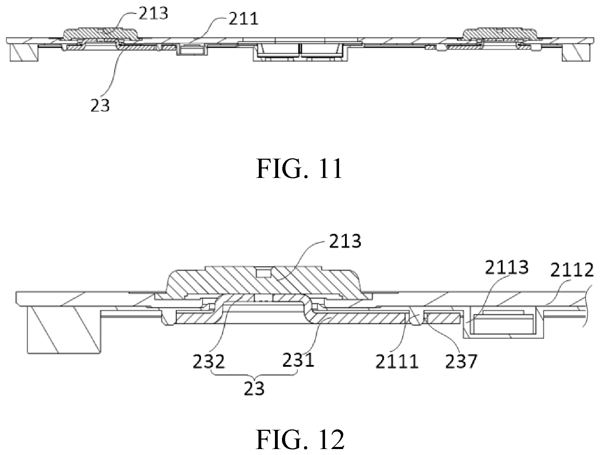

Referring to FIG. 3 to FIG. 12, the battery cell 20 includes electrode terminals 213, electrode assemblies 22, and adapter pieces 23. The adapter pieces 23 connect the electrode terminals 213 and the electrode assemblies 22.

Specifically, the battery cell 20 includes two electrode terminals 213, which are respectively a positive electrode terminal and a negative electrode terminal. The electrode assembly 22 is provided with two tabs 221, which are respectively a positive electrode tab 221 and a negative electrode tab 221. Two adapter pieces 23 are provided. One adapter piece 23 is connected between the positive electrode tab 221 and the positive electrode terminal, and the other adapter piece 23 is disposed between the negative electrode tab 221 and the negative electrode terminal. At least one adapter piece 23 is an adapter piece 23 with a thinned region 232.

Referring to FIG. 3 and FIG. 7 to FIG. 12, the battery cell 20 further includes a shell 21, and the electrode terminal 213 is disposed on the shell 21. The adapter piece 23 is provided with a positioning hole 237, the shell 21 is provided with a positioning protrusion 2111, and the positioning protrusion 2111 is inserted into the positioning hole 237.

In other examples, the positioning hole 237 may also be disposed in the thinned region 232, or a through hole 2331 in the thinned region 232 is used as the positioning hole.

The end cover 211 is provided with at least one positioning protrusion 235, the adapter piece 23 is provided with at least one positioning hole 237, and the positioning protrusion 2111 is inserted into the corresponding positioning hole 237, to improve the positioning accuracy of the adapter piece 23 and the electrode terminal 213.

By using the foregoing technical solution, the positioning hole 237 and the positioning protrusion 235 can be aligned with each other, so that the adapter piece 23 can be precisely aligned with the electrode terminal 213, thereby improving utilization of the welding region.

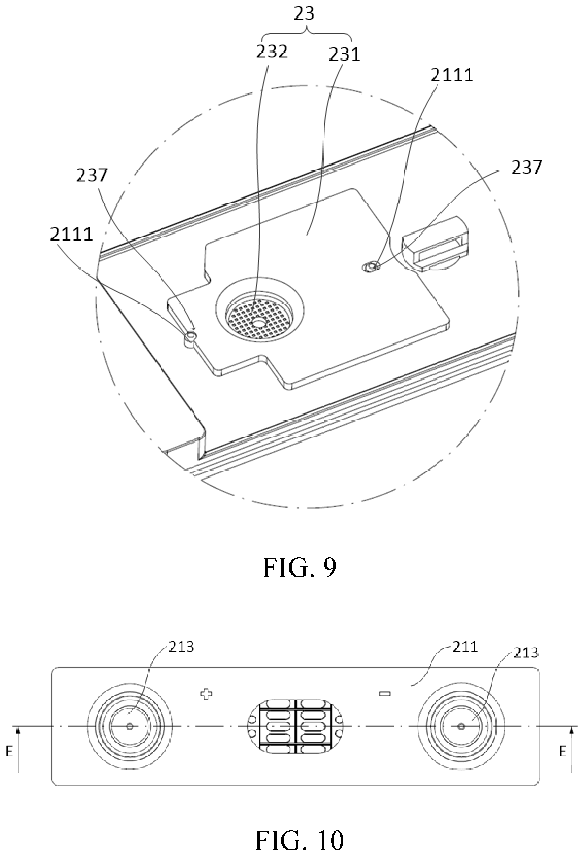

In some examples, as shown in FIG. 10 to FIG. 12, the shell 21 includes an end cover 211. The end cover 211 includes an end cover body 2112 and an insulating member 2113 disposed on the end cover body 2112. The positioning protrusion 2111 is disposed on the insulating member 2113.

The end cover 211 is provided with an electrode lead-out hole. At least one of the electrode terminal 213 and the adapter piece 23 penetrates into the electrode lead-out hole. The adapter piece 23 is welded to the electrode terminal 213. For example, the adapter piece 23 includes a body 234 and a boss 235. The body 234 is adhered to an inner side of the end cover 211, and the boss 235 penetrates into the electrode lead-out hole and is connected to the electrode terminal 213.

The insulating member 2113 is disposed on a side of the end cover body 2112. The insulating member 2113 is made of an insulating material. The insulating member 2113 is, for example, a plastic member, an insulating adhesive tape, or an insulating coating.

By disposing the positioning protrusion 2111 on the insulating member 2113, the positioning protrusion 2111 can be insulated from the adapter piece 23, and the positioning protrusion 2111 can also position the adapter piece 23.

It may be understood that the positioning protrusion 2111 may also be disposed on the end cover body 2112.

In some examples, the insulating member 2113 is a plastic member. The insulating member 2113 is made of a plastic material, facilitating forming of the positioning protrusion 2111, and achieving relatively high manufacturing efficiency and relatively low manufacturing costs.

A second aspect of the present application provides a battery 100, including the battery cell 20 according to the first aspect of the present application.

A third aspect of the present application provides a power consuming apparatus, including the battery 100 according to the second aspect. The battery 100 is configured to supply electrical energy to the power consuming apparatus.

The power consuming apparatus may be any one of the foregoing devices or systems using a battery.

It should be noted that, without conflict, the features in the examples of the present application may be combined with each other.

The foregoing examples are only used for describing the technical solutions of the present application, but are not intended to limit the present application. Although the present application is described in detail with reference to the foregoing examples, it should be appreciated by a person skilled in the art that modifications may still be made to the technical solutions recorded in the foregoing examples, or equivalent replacements may be made to some of the technical features; and these modifications or replacements do not cause the essence of corresponding technical solutions to depart from the spirit and scope of the technical solutions of the examples of the present application and shall be all included in the protection scope of the present application.

## Claims

1. A battery cell, wherein the battery cell comprises an electrode terminal, an electrode assembly, and an adapter piece; the adapter piece connects the electrode terminal and the electrode assembly; the adapter piece comprises a main body region and a thinned region that are connected; a thickness of the thinned region is less than a thickness of the main body region; and the thinned region is configured to be welded to the electrode terminal.

2. The battery cell according to claim 1, wherein the adapter piece is provided with a material accommodating space at the thinned region.

3. The battery cell according to claim 2, wherein the material accommodating space is a through hole extending through the thinned region.

4. The battery cell according to claim 3, wherein the through hole extends through a middle portion of the thinned region.

5. The battery cell according to claim 3, wherein a plurality of through holes are provided, and the plurality of through holes are uniformly distributed in the thinned region.

6. The battery cell according to claim 2, wherein the material accommodating space is a countersink disposed at the thinned region, and the countersink is disposed on at least one side of the thinned region along a thickness direction of the thinned region.

7. The battery cell according to claim 6, wherein the countersink is disposed on a side of the thinned region facing away from the electrode terminal, and a side of the thinned region facing the electrode terminal is planar.

8. The battery cell according to claim 2, wherein the material accommodating space comprises a through hole extending through the thinned region and a countersink disposed at the thinned region, the countersink is disposed on at least one side of the thinned region along a thickness direction of the thinned region, and the through hole is located at a bottom of the countersink.

9. The battery cell according to any one of claims 2 to 8, wherein a cross-sectional shape of the material accommodating space comprises at least one of a circular shape, an elliptic shape, an oblong shape, and a polygonal shape.

10. The battery cell according to any one of claims 1 to 9, wherein a thickness of the main body region is 1 mm to 4 mm, and a thickness of the thinned region is 0.5 mm to 2.5 mm.

11. The battery cell according to claim 10, wherein the thickness of the main body region is 1 mm to 2.5 mm, and the thickness of the thinned region is 0.6 mm to 1.5 mm.

12. The battery cell according to any one of claims 1 to 11, wherein
the adapter piece comprising a body and a boss, and the body has a first surface and a second surface disposed opposite to each other; and
the boss is formed by the body protruding out along a direction from the first surface to the second surface, the thinned region is disposed on the boss, and the main body region is disposed on the body.

13. The battery cell according to claim 12, wherein the boss comprises a top wall and a connecting wall connected between the top wall and the body, and at least a portion of a region of the top wall is the thinned region.

14. The battery cell according to any one of claims 1 to 13, wherein a surface of the thinned region configured to face away from the electrode terminal is provided with a recess.

15. The battery cell according to any one of claims 1 to 14, wherein the battery cell further comprises a shell, and the electrode terminal is disposed on the shell; and
the adapter piece is provided with a positioning hole, the shell is provided with a positioning protrusion, and the positioning protrusion is inserted into the positioning hole.

16. The battery cell according to claim 15, wherein the shell comprises an end cover, the end cover comprises an end cover body and an insulating member disposed on the end cover body, and the positioning protrusion is disposed on the insulating member in a protruding manner.

17. A battery, comprising the battery cell according to any one of claims 1 to 16.

18. A power consuming apparatus, comprising the battery according to claim 17, wherein the battery is configured to supply electrical energy to the power consuming apparatus.
